# EUROPEAN PATENT SPECIFICATION

(11) **EP 4 195 103 B1**
(45) Date of publication and mention of the grant of the patent: **31.12.2025**
(21) Application number: 22193576.0
(22) Date of filing: 02.09.2022
(51) Int. Cl.: G06N 3/09, G06N 3/045

(54) **DERIVING DATA FROM DATA OBJECTS BASED ON MACHINE LEARNING**
ABLEITUNG VON DATEN AUS DATENOBJEKTEN AUF DER BASIS VON MASCHINENLERNEN
DÉRIVATION DE DONNÉES À PARTIR D'OBJETS DE DONNÉES SUR LA BASE D'UN APPRENTISSAGE AUTOMATIQUE

(30) Priority: 13.12.2021 US 202117549637
(43) Date of publication of application: 14.06.2023
(73) Proprietor: SAP SE, 69190 Walldorf (DE)
(72) Inventor: Nelson, Catherine, 69190 Walldorf (DE); Dietz, John, 69190 Walldorf (DE)
(74) Representative: Müller-Boré & Partner Patentanwälte PartG mbB

(56) References cited:
- US-A1- 2010 042 453
- US-A1- 2021 056 434
- US-A1- 2021 192 282

## Description

### BACKGROUND

In recent years, interest in climate change and global warming has been increasingly growing. Companies are becoming more concerned and aware of how their businesses affect climate change and global warming. For example, some companies are now tracking the carbon footprints of their businesses. This may include monitoring energy and materials used in manufacturing, waste produced in manufacturing, transportation of goods, equipment used by employees (e.g., mobile devices, desktop computers, laptop computers, etc.), employee travel, etc.
US 2021/192282 A1 relates to systems and methods for managing indexing and tagging datasets using a plurality of nodes are disclosed. The system includes one or more memory units storing instructions and one or more processors configured to execute the instructions to perform operations. The operations include receiving a dataset comprising a plurality of columns and applying a series of nodes to the dataset. Applying the series of nodes comprises applying a first node comprising a machine learning model to generate a first probability, appending a first tag based on the first probability, and selecting second nodes subsequent in the series based on the first probability. Applying the series includes iteratively applying the selected second nodes to generate second probabilities and second tags. The operations include generating a data structure comprising the first and second probabilities and first and second tags. The operations may include outputting metadata.
US 2021/056434 A1 relates to systems and methods for analyzing input data using a first machine learning model corresponding to a root level node of a model tree classifier to generate a level node classification and a confidence score corresponding to the classification, and for each level in the hierarchy of nodes after the root level node in the model tree classifier, determining a next level node of the model tree classifier based on a generated classification output of a previous level node, and analyzing the input data to generate a level node classification output and a level node confidence score corresponding to the classification. The systems and methods further provide for generating a final classification for the input data based on alignment with a previous level node classification output and confidence scores corresponding to each level node classification output.

US 2010/042453 A1 relates to a system for monitoring and reducing greenhouse gas emissions and energy usage, focusing on various categories such as home, work, travel, and shopping. It employs detailed algorithms to calculate emissions based on user inputs and provides personalized recommendations for reducing carbon footprints.

### SUMMARY

It is an object of the invention to determine an amount of data values relating to received data, depending on possible different subcategories shown in the received data. This object is solved according to the invention by the features of the independent claims. Particular embodiments are the subject of the dependent claims. The invention is defined by the features of the independent claims. Particular embodiments are the subject of the dependent claims. .

The following detailed description and accompanying drawings provide a better understanding of the nature and advantages of various embodiments of the present disclosure.

### BRIEF DESCRIPTION OF THE DRAWINGS

FIG. 1 illustrates a system for deriving data from data objects based on machine learning according to some embodiments.
FIG. 2 illustrates an example expense data object definition according to some embodiments.
FIG. 3 illustrates an example expense data object according to some embodiments.
FIG. 4 illustrates another example expense data object according to some embodiments.
FIG. 5 illustrates another example expense data object according to some embodiments.
FIG. 6 illustrates a dataflow for processing the expense data object illustrated in FIG. 3 according to some embodiments.
FIG. 7 illustrates a dataflow for processing the expense data object illustrated in FIG. 4 according to some embodiments.
FIG. 8 illustrates a dataflow for processing the expense data object illustrated in FIG. 5 according to some embodiments.
FIG. 9 illustrates a process for deriving data from data objects based on machine learning according to some embodiments.
FIG. 10 illustrates an exemplary computer system, in which various embodiments may be implemented.
FIG. 11 illustrates an exemplary computing device, in which various embodiments may be implemented.
FIG. 12 illustrates an exemplary system, in which various embodiments may be implemented.

### DETAILED DESCRIPTION

In the following description, for purposes of explanation, numerous examples and specific details are set forth in order to provide a thorough understanding of the present disclosure. It will be evident, however, to one skilled in the art that various embodiment of the present disclosure as defined by the claims may include some or all of the features in these examples alone or in combination with other features described below, and may further include modifications and equivalents of the features and concepts described herein.

Described herein are techniques for deriving data from data objects based on machine learning. In some embodiments, a computing system manages expense data objects. Each of the expense data objects is associated with a category (e.g., a lodging category, a meal category, a transport category, etc.). In some instances where a particular category has subcategories, data objects associated with the particular category are also associated with a subcategory. The computing system may be configured to derive data for a defined category of data objects. For example, in some cases, the computing system can be configured to derive gas emissions data for data objects associated with a transport category. To gas emissions data for such data objects, the computing system may retrieve a data object associated with the transport category. Transport data objects can be associated with an airfare subcategory, a ground transport subcategory, or a car rental subcategory. The computing system determines which subcategory with which the data object is associated. Based on the determined subcategory, the computing system determines a set of machine learning models to use to derive gas emissions data from the data object. Next, the computing system provides some data of the data object as inputs to the set of machine learning models, which determines a distance associated with the data object. The computing system then determines an amount of gas emissions associated with the data object based on a defined set of emissions data and the determined distance.

The techniques described in the present application provide a number of benefits and advantages over conventional methods for deriving data from data objects. For instance, using machine learning predict certain data values that are then used to derive data from data objects provides more accurate derived data.

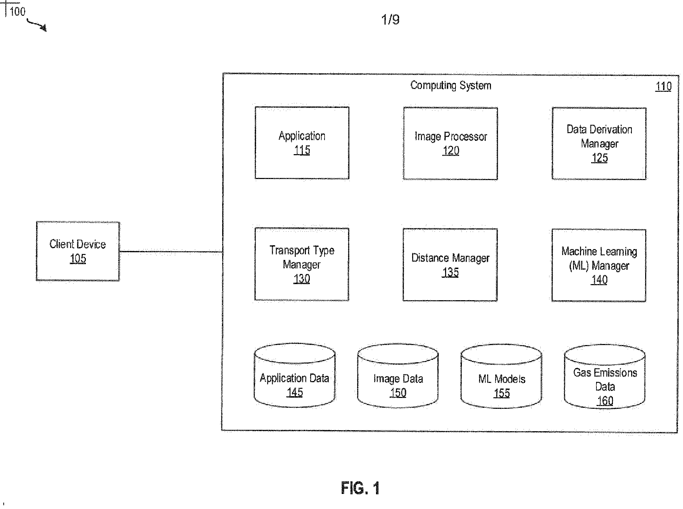

FIG. 1 illustrates a system 100 for deriving data from data objects based on machine learning according to some embodiments. As shown, system 100 includes client device 105 and computing system 110. Client device 105 may communicate and interact with computing system 110. For instance, a user of client device 105 can send an image of a document (e.g., a receipt) to computing system 110 (e.g., via a web browser or an application operating on client device 105) for processing. The image may be captured by an image capture device (e.g., a camera) communicatively coupled to client device 105. Additionally, a user of client device 105 can access application 115 and request to view expense reports generated based on images that client device 105 sent to computing system 110 for processing. While FIG. 1 shows one client device, one of ordinary skill in the art will appreciate that system 100 can include any number of additional client devices that are configured the same as or similar to client device 105.

As illustrated in FIG. 1, computing system 110 includes application 115, image processor 120, data derivation manager 125, transport type manager 130, distance manager 135, machine learning (ML) manager 140, and storages 145-160. Application data storage 145 is configured to store application data generated and/or utilized by application 115. For example, application data storage 145 can store data objects, data derived from data objects, expense reports, etc. Image data storage 150 stores images (e.g., images of documents) received from client devices (e.g., client device 105). Machine learning (ML) models storage 155 is configured to store ML models. Gas emissions data storage 160 stores defined sets of gas emissions data. In some embodiments, a defined set of gas emissions data includes gas emission rates for a particular mode of transport (e.g., automobiles, motorcycles, buses, trains, subways, etc.) and a particular geographical area (e.g., a country). In some cases, a defined set of gas emissions data may include gas emission rates for a particular mode of transport (e.g., airplanes, etc.) and a class of travel (e.g., economy, business class, first class, etc.). In some embodiments, storages 145-160 are implemented in a single physical storage while, in other embodiments, storages 145-160 may be implemented across several physical storages. While FIG. 1 shows storages 145-160 as part of computing system 110, one of ordinary skill in the art will appreciate that application data storage 145, image data storage 150, ML models storage 155, and/or gas emissions data storage 160 may be external to computing system 110 in some embodiments.

Application 115 is a software application operating on computing system 110 configured to manage images of documents, generate data objects based on the images of the documents, and derive data from. For instance, application 115 can receive from client device 105 an image of a document that was captured by an image capture device of client device 105. In response to receiving the image, application 115 sends image processor 120 the image and a request to process it. In some embodiments, application 115 also stores the image of the document in image data storage also 145. In some instances, application 115 may receive from client device 105 a request for data objects generated from images of receipts and/or data derived from data objects (e.g., a request for expense reports that include expenses extracted from images of receipts). In response, application 115 accesses application data storage 150 to retrieve the requested data and provides the data to client device 105.

Image processor 120 is configured to process images. Image processor 120 receives from application 115 an image of a document and a request to process it. In response to the request, image processor 120 detects text in the image of the document. In some embodiments, image processor 120 uses an optical character recognition (OCR) technique to detect the text in the image. Based on the detected text, image processor 120 generates a data object. Then, image processor 120 stores the data object and the detected text in application data 140. In some instances, image processor 120 can send data derivation manager 125 a request to derive data from the data object that was generated. Image processor 120 may handle images of any number of different types of documents. For each type of document, image processor 120 generates a different defined data object. For instance, image processor 120 may generate a first defined data object for images of receipts, a second defined data object for images of credit card bills, a third defined data object for images of bank statements, a fourth defined data object for images of medical prescriptions, etc.

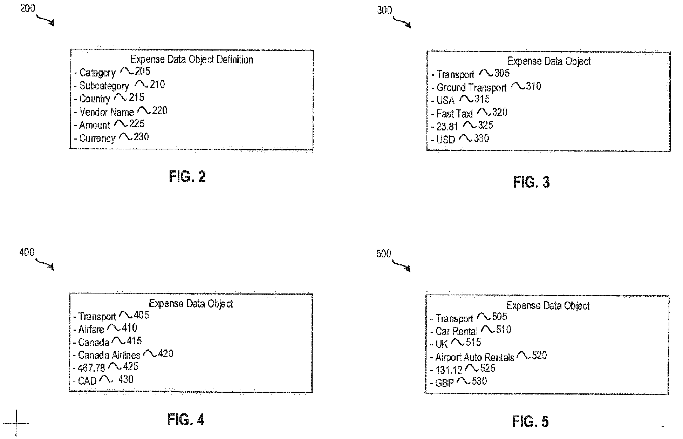

FIG. 2 illustrates an example expense data object definition 200 according to some embodiments. Image processor 120 generates an expense data object for an image of a receipt based on expense data object definition 200. As shown, expense data object definition 200 includes six attributes 205-230. Attribute 205 stores a category associated with an expense data object (e.g., a category associated with an item in the receipt). Attribute 210 is configured to store a subcategory of the category associated with the expense data object. Attribute 215 store a country associated with the expense data object (e.g., a country in which a transactions for the item occurred). Attribute 225 is configured to store an amount associated with the expense data object (e.g., an amount of the item). Attribute 230 stores a currency associated with the expense data object (e.g., a currency used to pay for the item). The number and types of attributes in expense data object definition 200 are shown for the purpose of explanation. One of ordinary skill in the art will understand that additional and/or different attributes can be included in an expense data object definition. Expense data object 200 will be used to explain below how data derivation manager 125, transport type manager 130, distance manager 135, and ML manager 140 operate. However, one of ordinary skill in the art will understand that derivation manager 125, transport type manager 130, distance manager 135, and/or ML manager 140 may perform additional and/or different operations for different defined data objects.

Several examples of expense data objects will now be described by reference to FIGS. 3-5. FIG. 3 illustrates an example expense data object 300 according to some embodiments. As depicted in FIG. 3, expense data object 300 includes attribute values 305-330 that correspond to attributes 205-230. For this example, image processor 120 generated expense data object 300 based on an image of a receipt for a taxi ride. Attribute value 305 ("Transport" in this example) is a category associated with expense data object 300. Attribute value 310 ("Ground Transport" in this example) is a subcategory of the category associated with expense data object 300. Attribute value 315 ("USA" in this example) is a country associated with expense data object 300. Attribute value 320 ("Fast Taxi" in this example) is a vendor name associated with expense data object 300. Attribute value 325 ("23.81" in this example) is an amount associated with expense data object 300. Attribute value 330 ("USD" in this example) is a currency associated with expense data object 300.

FIG. 4 illustrates another example expense data object 400 according to some embodiments. As shown in FIG. 4, expense data object 4 includes attribute values 405-430 that correspond to attributes 205-230. In this example, image processor 120 generated expense data object 400 based on an image of a receipt for a flight. Attribute value 405 ("Transport" in this example) is a category associated with expense data object 400. Attribute value 410 ("Airfare" in this example) is a subcategory of the category associated with expense data object 400. Attribute value 415 ("Canada" in this example) is a country associated with expense data object 400. Attribute value 420 ("Canada Airlines" in this example) is a vendor name associated with expense data object 400. Attribute value 425 ("467.78" in this example) is an amount associated with expense data object 400. Attribute value 430 ("CAD" in this example) is a currency associated with expense data object 400.

FIG. 5 illustrates another example expense data object 500 according to some embodiments. As illustrated in FIG. 5, expense data object 500 includes attribute values 505-530 that correspond to attributes 205-230. Here, image processor 120 generated expense data object 500 based on an image of a receipt for a car rental. Attribute value 505 ("Transport" in this example) is a category associated with expense data object 500. Attribute value 510 ("Car Rental" in this example) is a subcategory of the category associated with expense data object 500. Attribute value 515 ("UK" in this example) is a country associated with expense data object 500. Attribute value 520 ("Airport Auto Rentals" in this example) is a vendor name associated with expense data object 500. Attribute value 525 ("131.12" in this example) is an amount associated with expense data object 500. Attribute value 530 ("GBP" in this example) is a currency associated with expense data object 500.

Returning to FIG. 1, data derivation manager 125 is responsible for deriving data from data objects. For example, data derivation manager 125 can receive from image processor 120 a request to derive data from an expense data object. In response to the request, data derivation manager 125 accesses application data storage 145 to retrieve the expense data object from it. Then, data derivation manager 125 determines whether the category associated with the expense data object is a category (e.g., a transport category) defined as one in which data can be derived from expense data objects associated with the category. If so, data derivation manager 125 determines whether a subcategory of the category associated with the expense data object is a subcategory defined for transport type processing. If the expense data object is not associated with a subcategory defined for transport type processing, data derivation manager 125 sends distance manager 135 the expense data object to distance manager 135 and a request to determine a distance value for the expense data object. If the expense data object is associated with a subcategory defined for transport type processing, data derivation manager 125 sends transport type manager 130 the expense data object and a request to determine a transport type associated with the expense data object. Once data derivation manager 125 receives the transport type from transport type manager 130, data derivation manager 125 sends distance manager 135 the expense data object, the transport type associated with the expense data object, and a request to determine a distance value for the expense data object.

After data derivation manager 125 receives a distance value from distance manager 135, data derivation manager 125 accesses gas emissions data storage 160 to retrieve a defined set of gas emissions data. Different sets of gas emissions data are defined to be used for expense data objects associated with different subcategories or different subcategories and transport types. As such, data derivation manager 125 retrieves the set of gas emissions data defined for the subcategory or subcategory and transport type associated with the expense data object. Based on the set of gas emissions data, the distance value associated with the expense data object, and data in the expense data object, data derivation manager 125 determines gas emissions data for the expense data object. In some cases, data derivation manager 125 associates the derived gas emissions data with the expense data object and stores it in application data storage 145. In other cases, data derivation manager 125 stores the derived gas emissions data in the expense data object.

Transport type manager 130 is configured to determine transport types associated with data objects. For instance, transport type manager 130 can receive from data derivation manager 125 an expense data object and a request to determine a transport type associated with the expense data object. In response to the request, transport type manager 130 accesses ML models storage 155 to retrieve an ML model configured to determine a transport type from several defined transport types associated with a data object (also referred to as a transport type ML model). Next, transport type manager 130 provides the value of the vendor name attribute of the expense data object as an input to the ML model. Based on the input, the ML model generates a probability value for each of the several defined transport types. Each probability value indicates the likelihood that the expense data object is associated with the corresponding defined transport type. In some embodiments, the probability values are values between 0 and 1 and the sum of the probability values is 1. Transport type manager 130 determines the transport type associated with the expense data object by selecting the defined transport type that has the highest probability value. Transport type manager 130 then sends the determined transport type to data derivation manager 125.

Distance manager 135 handles the determination of distance values for data objects. For example, distance manager 135 may receive from data derivation manager 125 an expense data object and a request to determine a distance value for the expense data object. In response, distance manager 135 accesses image data storage 150 to retrieve the text detected in the image of the document used to generate the expense data object. Then, distance manager 135 applies a set of regular expressions on the detected text to attempt to extract a distance value. If successful, distance manager 135 sends the extracted distance value to data derivation manager 125. Otherwise, distance manager 135 accesses ML models storage 155 to retrieve an ML model that is configured to determine distance values for the subcategory associated with the expense data object.

In some instances, distance manager 135 can receive from data derivation manager 125 an expense data object, a transport type associated with the expense data object, and a request to determine a distance value for the expense data object. In response to the request, distance manager 135 accesses image data storage 150 to retrieve the text detected in the image of the document used to generate the expense data object. Next, distance manager 135 attempts to extract a distance value from the detected text by applying a set of regular expressions on the detected text. If successful, distance manager 135 sends the extracted distance value to data derivation manager 125. If not, distance manager 135 determines whether the transport type associated with the expense data object is a transport type defined to have its own ML model (e.g., a taxi transport type). If so, distance manager 135 accesses ML models storage 155 to retrieve the ML model configured to determine distance values for expense data objects associated with the transport type. Otherwise, distance manager 135 accesses ML models storage 155 to retrieve an ML model configured to determine distance values for expense data objects associated with other transport types (also referred to as a default transport type ML model). Then, distance manager 135 provides the values of the country, amount, vendor name, and currency attributes of the expense data object as inputs to the retrieved ML model. Based on the inputs, the ML model outputs a predicted distance value, which distance manager 135 sends to data derivation manager 125.

ML manager 140 is configured to manage ML models. For instance, ML manager 140 may be responsible for training various different ML models. One ML model that ML manager 140 trains is the transport type ML model mentioned above that is configured to determine a transport type from several defined transport types associated with a data object. In some embodiments, ML manager 140 uses vendor names labeled with correct transport types as training data for training the transport type ML model. In some such embodiments, ML manager 140 splits the vendor names into character/letter n-grams (a contiguous sequence of n letters in the vendor name) and uses the character/letter n-grams as inputs to train the transport type ML model. Once trained, the transport type ML model can be used to predict a transport type for a given vendor name. For embodiments where the transport type ML model is trained based on character/letter n-grams, splits the given vendor name into character/letter n-grams and uses them to predict a transport type. In some embodiments, the transport type ML model can generate a probability value for each of the several defined transport types. Each probability value indicates the likelihood that an expense data object is associated with a corresponding defined transport type. In some such embodiments, the probability values are values between 0 and 1 and the sum of the probability values is 1. In some embodiments, the transport type ML model is implemented as a logical regression model.

To train an ML model configured to determine distance values for expense data objects associated with a particular transport type, ML manager 140 accesses application data 145 to identify expense data objects associated with the particular transport type (e.g., for a taxi transport type, identify expense data objects associated with a ground transport subcategory of the transport category that are determined to be a taxi type ground transport; for an airfare transport type, identify expense data objects associated with an airfare transport category; for a car rental transport type, identify expense data objects associated with a car rental transport category; etc.). Then, for each of the identified expense data objects, ML manager 140 attempts to extract a distance value by applying a set of regular expressions to the detected text in images used to generate the expense data object. If successful, ML manager 140 adds the extracted distance value and the expense data object to a training data set. After iterating through all the identified expense data objects, ML manager 140 uses the data in the training data set to train the ML model. The features of the model include country, amount, vendor name, and currency. Thus, values of country, amount, vendor name, and currency attributes of the data objects in the training data set as well as extracted distance values are used to train the ML model. Once trained, the ML model can predict a distance value based on a given set of values for country, amount, vendor name, and currency attributes. In some embodiments, the ML model is implemented as a multi-layer perceptron regression model (e.g., a 2-layer fully connected neural network). In other embodiments, the ML model is implemented as a named entity recognition (NER) model configured to classify the inputs it receives and predict a distance value based on the classified inputs.

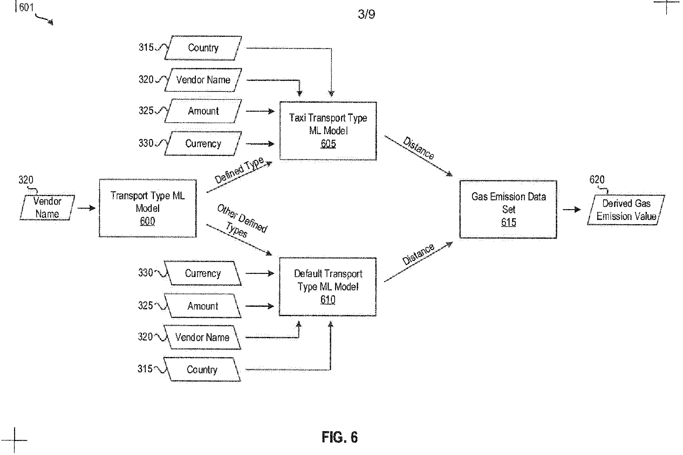

FIG. 6 illustrates a dataflow 601 for processing expense data object 300 according to some embodiments. As mentioned above, image processor 120 generated expense data object 300 based on an image of a receipt for a taxi ride. Also, image processor 120 sent data derivation manager 125 a request to derive data from expense data object 300. In response to the request, data derivation manager 125 accessed application data storage 145 to retrieve expense data object 300. Next, data derivation manager 125 determined whether the category associated with the expense data object is a transport category, which is a category in this example defined as one in which data can be derived from expense data objects associated with the category. As shown by attribute value 305, expense data object 300 is associated with a transport category. Data derivation manager 125 then determined that a subcategory of the transport category associated with expense data object 300 is a ground transport subcategory, which is a subcategory defined for transport type processing in this example. Hence, data derivation manager 125 sent transport type manager 130 expense data object 300 and a request to determine a transport type associated with expense data object 300.

In response to receiving the request and expense data object 300, transport type manager 130 accesses ML models storage 155 to retrieve transport type ML model 600, which is configured to determine a transport type from several defined transport types associated with a data object. Here, the defined transport types include a taxi transport type, a bus transport type, a subway transport type, and a train transport type. As illustrated in FIG. 6, dataflow 601 begins with transport type manager 130 providing attribute value 320, which is the value of the vendor name attribute of expense data object 300, as an input to transport type ML model 600. Based on the vendor name, transport type ML model 600 generates a probability value for each of the defined transport types. Each probability value indicates the likelihood that the expense data object is associated with the corresponding defined transport type. In some embodiments, the probability values are values between 0 and 1 and the sum of the probability values is 1. Transport type manager 130 determines the transport type associated with expense data object 300 by selecting the defined transport type that has the highest probability value. In this example, the transport type with the highest probability value generated by ML model 600 is the taxi transport type. As such, transport type manager 130 sends the taxi transport type to data derivation manager 125.

Upon receiving the taxi transport type, data derivation manager 125 sends distance manager 135 expense data object 300, the taxi transport type associated with expense data object 300, and a request to determine a distance value for expense data object 300. In response to the request, distance manager 135 accesses image data storage 150 to retrieve the text detected in the image of the receipt used to generate expense data object 300. Distance manager 135 then attempts to extract a distance value from the detected text by applying a set of regular expressions on the detected text. If successful, distance manager 135 sends the extracted distance value to data derivation manager 125. Otherwise, distance manager 135 determines whether the transport type associated with expense data object 300 is a taxi transport type, which is a transport type defined to have its own ML model. If distance manager 135 determines that the transport type associated with expense data object 300 is not a taxi transport type, distance manager 135 accesses ML models storage 155 to retrieve default transport type ML model 610, which is configured to determine distance values for expense data objects associated with transport types that do not have their own ML model. In some embodiments, default transport type ML model 610 may be an NER model. Distance manager 135 would provide the values of the country, amount, vendor name, and currency attributes of expense data object 300 as inputs to default transport type ML model 610. In response, default transport type ML model 610 outputs a predicted distance value. In some instances, default transport type ML model 610 cannot predict a distance value or the predicted distance value has an associated confidence value that is below a defined threshold value. In some such instances, distance manager 135 may use average distance values for these transport types to determine a distance value.

If distance manager 135 determines that the transport type associated with expense data object 300 is a taxi transport type, distance manager 135 accesses ML models storage 155 to retrieve taxi transport type ML model 605, which is configured to determine distance values for expense data objects associated with the taxi transport type. Next, distance manager 135 provides the values of the country, amount, vendor name, and currency attributes of expense data object 300 as inputs to taxi transport type ML model 605. Based on the inputs, taxi transport type ML model 605 outputs a predicted distance value.

In this example, distance manager 135 was not successful in extracting a distance value by applying the set of regular expressions on the text detected in the image of the receipt used to generate expense data object 300. Since the taxi transport type is a transport type that is defined to have its own ML model, distance manager 135 accesses ML models storage 155 to retrieve taxi transport type ML model 605. As shown in FIG. 6, distance manager 135 provides attribute values 315-330, which are the values of the country attribute, the vendor name attribute, the amount attribute, and the currency attribute, respectively, of expense data object 300. Based on the inputs, taxi transport type ML model 605 outputs a predicted distance value. Distance manager 135 then sends the distance value to data derivation manager 125.

Once data derivation manager 125 receives the distance value from distance manager 135, data derivation manager 125 accesses gas emissions data storage 160 to retrieve a defined set of gas emissions data. For this example, data derivation manager 125 retrieves a set of gas emissions data 615 defined for a taxi transport type and the country of the United States of America (USA). The set of gas emission data 615 includes different amounts of gas emissions produced for different distances. Data derivation manager 125 uses the distance value to look up the corresponding amount of gas emissions produced in the set of gas emissions data 615. Data derivation manager 125 determines this amount of gas emissions produced as derived gas emissions value 620. Then, data derivation manager 125 associates derived gas emissions value 620 with expense data object 300 and stores it in application data storage 145. In some instances, data derivation manager 125 stores derived gas emission value 620 in expense data object 300.

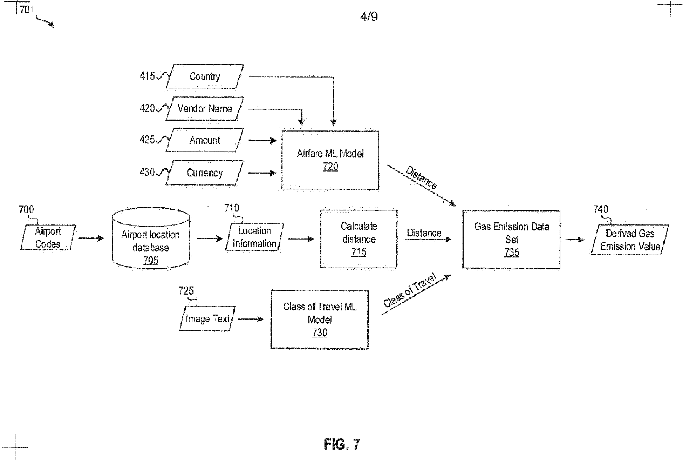

FIG. 7 illustrates a dataflow 701 for processing expense data object 400 according to some embodiments. As explained above, image processor 120 generated expense data object 400 based on an image of a receipt for a flight. Additionally, image processor 120 sent data derivation manager 125 a request to derive data from expense data object 400. In response, data derivation manager 125 accessed application data storage 145 to retrieve expense data object 400. Data derivation manager 125 then determined whether the category associated with the expense data object is a transport category, which is a category in this example defined as one in which data can be derived from expense data objects associated with the category. As illustrated by attribute value 405, expense data object 400 is associated with a transport category. Next, data derivation manager 125 determined that a subcategory of the transport category associated with expense data object 400 is an airfare subcategory, which is not a subcategory defined for transport type processing in this example. As such, data derivation manager 125 sent distance manager 135 expense data object 400 and a request to determine a distance value for expense data object 400.

Upon receiving the request and expense data object 400 from data derivation manager 125, distance manager 135 accesses image data storage 150 to retrieve the text detected in the image of the receipt used to generate expense data object 400. Next, attempts to extract airport codes 700 (e.g., an airport code of a departure airport and an airport code of an arrival airport) by applying a set of regular expressions on the detected text. If distance manager 135 is able to extract airport codes 700, distance manager 135 uses airport codes 700 to perform a lookup in airport location database 705, which is configured to store location information (e.g., latitude and longitude coordinates) of airports based on airport codes, to obtain location information 710 of the airports associated with airport codes 700. Then, distance manager 135 calculates, at 715, the distance between the airports based on the location information of the airports.

If distance manager 135 is unable to extract airport codes 700, distance manager 135 accesses ML models storage 155 to retrieve airfare ML model 720, which is configured to determine distance values for expense data objects associated with the airfare transport type. Distance manager 135 then provides the values of the country, amount, vendor name, and currency attributes of expense data object 400 as inputs to airfare ML model 720. Based on the inputs, airfare ML model 720 outputs a predicted distance value.

After determining a distance value (either by calculating it from location information 710 or using airfare ML model 720 to predict it), distance manager 135 sends the distance value to data derivation manager 125. In response to receiving the distance value, data derivation manager 125 accesses ML models storage 155 to retrieve class of travel ML model 730, which is configured to determine a class of travel for airfares based on text. Next, data derivation manager 125 provides the text detected in the image of the receipt used to generate expense data object 400, which is represented as image text 725 in FIG. 7, as input to class of travel ML model 730. Based on image text 725, class of travel ML model 730 predicts a class of travel. Data derivation manager 125 then accesses gas emissions data storage 160 to retrieve a defined set of gas emissions data. In this example, data derivation manager 125 retrieves a set of gas emissions data 735 defined for an airfare transport type and the class of travel predicted by class of travel ML model 730. The set of gas emission data 735 includes different amounts of gas emissions produced for different distances. Data derivation manager 125 uses the distance value to look up the corresponding amount of gas emissions produced in the set of gas emissions data 735. Data derivation manager 125 determines this amount of gas emissions produced as derived gas emissions value 740. Next, data derivation manager 125 associates derived gas emissions value 740 with expense data object 400 and stores it in application data storage 145. In some cases, data derivation manager 125 stores derived gas emission value 740 in expense data object 400.

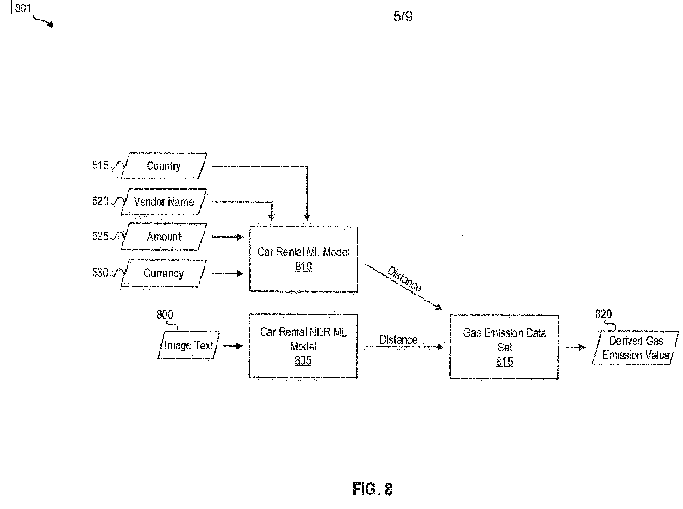

FIG. 8 illustrates a dataflow 801 for processing expense data object 500 according to some embodiments. As described above, image processor 120 generated expense data object 500 based on an image of a receipt for a car rental. In addition, image processor 120 sent data derivation manager 125 a request to derive data from expense data object 400. In response to the request, data derivation manager 125 accessed application data storage 145 to retrieve expense data object 500. Next, data derivation manager 125 determined whether the category associated with the expense data object is a transport category, which is a category in this example defined as one in which data can be derived from expense data objects associated with the category. As depicted by attribute value 505, expense data object 500 is associated with a transport category. Data derivation manager 125 then determined that a subcategory of the transport category associated with expense data object 500 is a car rental subcategory, which is not a subcategory defined for transport type processing in this example. Therefore, data derivation manager 125 sent distance manager 135 expense data object 500 and a request to determine a distance value for expense data object 500.

When distance manager 135 receives the request and expense data object 500, distance manager 135 accesses image data storage 150 to retrieve the text detected in the image of the receipt used to generate expense data object 500, which is indicated as image text 800 in FIG. 8. Then, distance manager 135 accesses ML models storage 155 to retrieve car rental NER ML model 805, which is an NER model configured to determine distance values based on text. Distance manager 135 provides image text 800 as inputs to car rental NER ML model 805. Based on image text 725, car rental NER ML model 805 predicts a distance value. If car rental NER ML model 805 is unable to predict a distance value, distance manager 135 then accesses ML models storage 155 to retrieve car rental ML model 810, which is configured to determine distance values for expense data objects associated with the car rental transport type. Next, distance manager 135 provides the values of the country, amount, vendor name, and currency attributes of expense data object 500 as inputs to car rental ML model 810. Based on the inputs, car rental ML model 810 outputs a predicted distance value.

Once distance manager 135 determines a distance value (either by using car rental NER ML model 805 or using car rental ML model 810 to predict it), distance manager 135 sends the distance value to data derivation manager 125. In response, data derivation manager 125 accesses gas emissions data storage 160 to retrieve a defined set of gas emissions data. For this example, data derivation manager 125 retrieves a set gas emissions data 815 defined for a car rental transport type and the country of the United Kingdom (UK). The set of gas emission data 815 includes different amounts of gas emissions produced for different distances. Data derivation manager 125 uses the distance value to look up the corresponding amount of gas emissions produced in the set of gas emissions data 815. Data derivation manager 125 determines this amount of gas emissions produced as derived gas emissions value 820. Then, data derivation manager 125 associates derived gas emissions value 820 with expense data object 500 and stores it in application data storage 145. In some instances, data derivation manager 125 stores derived gas emission value 820 in expense data object 500.

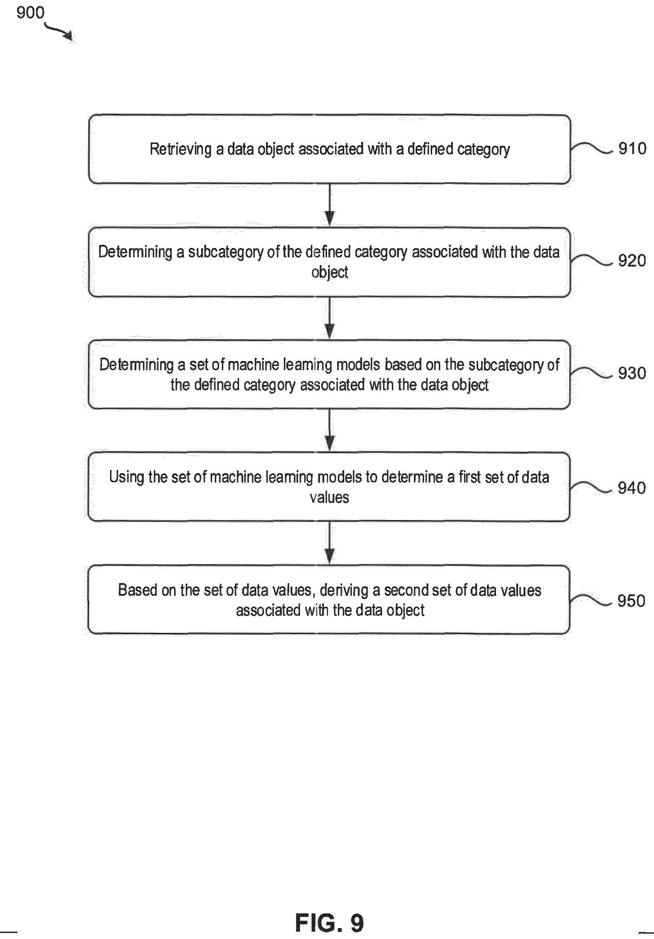

FIG. 9 illustrates a process 900 for deriving data from data objects based on machine learning according to some embodiments. In some embodiments, computing system 110 performs process 900. Process 900 begins by retrieving, at 910, a data object associated with a defined category. Referring to FIGS. 1 and 3 as an example, after image processor 120 generates expense data object 300, image processor 120 sends data derivation manager 125 a request to derive data from expense data object 300. In response to the request, data derivation manager 125 accesses application data storage 145 to retrieve expense data object 300.

Next, process 900 determines, at 920, a subcategory of the defined category associated with the data object. Referring to FIGS. 1 and 3 as an example, data derivation manager 135 determines data that a subcategory of the transport category associated with expense data object 300 is a ground transport subcategory. Process 900 then determines, at 930, a set of machine learning models based on the subcategory of the defined category associated with the data object. Referring to FIGS. 1, 3, and 6 as an example, distance manager 135 can determine different ML models to use based on different subcategories associated with an expense data object. For example, distance manager 135 determines taxi transport type ML model 605 or a default transport type ML model 610 when the subcategory associated with an expense data object is a ground transport subcategory.

At 940, process 900 uses the set of machine learning models to determine a first set of data values. Referring to FIGS. 1, 3, and 6 as an example, distance manager 135 can provide the values of the country, amount, vendor name, and currency attributes of the expense data object as inputs to taxi transport type ML model 605. Finally, based on the set of data values, process 900 derives, at 950, a second set of data values associated with the data object. Referring to FIGS. 1, 3, and 6 as an example, data derivation manager 125 may use the distance value to look up the corresponding amount of gas emissions produced in a set of gas emissions data 615. Data derivation manager 125 determines this amount of gas emissions produced as derived gas emissions value 620.

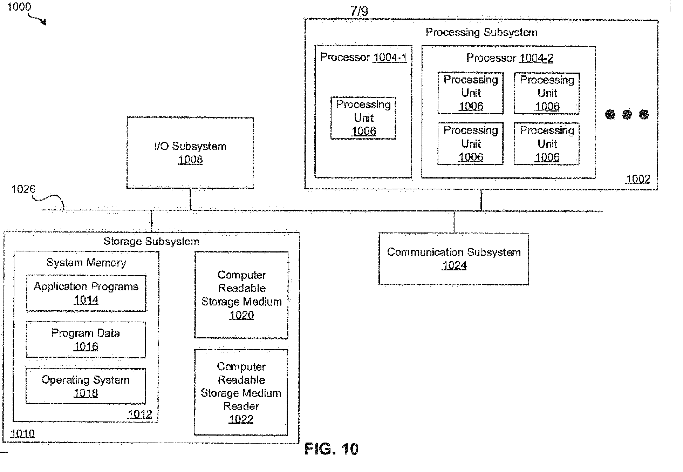

FIG. 10 illustrates an exemplary computer system 1000 for implementing various embodiments described above. For example, computer system 1000 may be used to implement client device 105 and computing system 110. Computer system 1000 may be a desktop computer, a laptop, a server computer, or any other type of computer system or combination thereof. Some or all elements of application 115, image processor 120, data derivation manager 125, transport type manager 130, distance manager 135, ML manager 140, or combinations thereof can be included or implemented in computer system 1000. In addition, computer system 1000 can implement many of the operations, methods, and/or processes described above (e.g., process 900). As shown in FIG. 10, computer system 1000 includes processing subsystem 1002, which communicates, via bus subsystem 1026, with input/output (I/O) subsystem 1008, storage subsystem 1010 and communication subsystem 1024.

Bus subsystem 1026 is configured to facilitate communication among the various components and subsystems of computer system 1000. While bus subsystem 1026 is illustrated in FIG. 10 as a single bus, one of ordinary skill in the art will understand that bus subsystem 1026 may be implemented as multiple buses. Bus subsystem 1026 may be any several types of bus structures (e.g., a memory bus or memory controller, a peripheral bus, a local bus, etc.) using any of a variety of bus architectures. Examples of bus architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, a Universal Serial Bus (USB), etc.

Processing subsystem 1002, which can be implemented as one or more integrated circuits (e.g., a conventional microprocessor or microcontroller), controls the operation of computer system 1000. Processing subsystem 1002 may include one or more processors 1004. Each processor 1004 may include one processing unit 1006 (e.g., a single core processor such as processor 1004-1) or several processing units 1006 (e.g., a multicore processor such as processor 1004-2). In some embodiments, processors 1004 of processing subsystem 1002 may be implemented as independent processors while, in other embodiments, processors 1004 of processing subsystem 1002 may be implemented as multiple processors integrate into a single chip or multiple chips. Still, in some embodiments, processors 1004 of processing subsystem 1002 may be implemented as a combination of independent processors and multiple processors integrated into a single chip or multiple chips.

In some embodiments, processing subsystem 1002 can execute a variety of programs or processes in response to program code and can maintain multiple concurrently executing programs or processes. At any given time, some or all of the program code to be executed can reside in processing subsystem 1002 and/or in storage subsystem 1010. Through suitable programming, processing subsystem 1002 can provide various functionalities, such as the functionalities described above by reference to process 900.

I/O subsystem 1008 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 1000 to a user or another device (e.g., a printer).

As illustrated in FIG. 10, storage subsystem 1010 includes system memory 1012, computer-readable storage medium 1020, and computer-readable storage medium reader 1022. System memory 1012 may be configured to store software in the form of program instructions that are loadable and executable by processing subsystem 1002 as well as data generated during the execution of program instructions. In some embodiments, system memory 1012 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). System memory 1012 may include different types of memory, such as static random access memory (SRAM) and/or dynamic random access memory (DRAM). System memory 1012 may include a basic input/output system (BIOS), in some embodiments, that is configured to store basic routines to facilitate transferring information between elements within computer system 1000 (e.g., during start-up). Such a BIOS may be stored in ROM (e.g., a ROM chip), flash memory, or any other type of memory that may be configured to store the BIOS.

As shown in FIG. 10, system memory 1012 includes application programs 1014 (e.g., application 115), program data 1016, and operating system (OS) 1018. OS 1018 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Computer-readable storage medium 1020 may be a non-transitory computer-readable medium configured to store software (e.g., programs, code modules, data constructs, instructions, etc.). Many of the components (e.g., application 115, image processor 120, data derivation manager 125, transport type manager 130, distance manager 135, and ML manager 140) and/or processes (e.g., process 900) described above may be implemented as software that when executed by a processor or processing unit (e.g., a processor or processing unit of processing subsystem 1002) performs the operations of such components and/or processes. Storage subsystem 1010 may also store data used for, or generated during, the execution of the software.

Storage subsystem 1010 may also include computer-readable storage medium reader 1022 that is configured to communicate with computer-readable storage medium 1020. Together and, optionally, in combination with system memory 1012, computer-readable storage medium 1020 may comprehensively represent remote, local, fixed, and/or removable storage devices plus storage media for temporarily and/or more permanently containing, storing, transmitting, and retrieving computer-readable information.

Computer-readable storage medium 1020 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device.

Communication subsystem 1024 serves as an interface for receiving data from, and transmitting data to, other devices, computer systems, and networks. For example, communication subsystem 1024 may allow computer system 1000 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 1024 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 1024 may provide components configured for wired communication (e.g., Ethernet) in addition to or instead of components configured for wireless communication.

One of ordinary skill in the art will realize that the architecture shown in FIG. 10 is only an example architecture of computer system 1000, and that computer system 1000 may have additional or fewer components than shown, or a different configuration of components. The various components shown in FIG. 10 may be implemented in hardware, software, firmware or any combination thereof, including one or more signal processing and/or application specific integrated circuits.

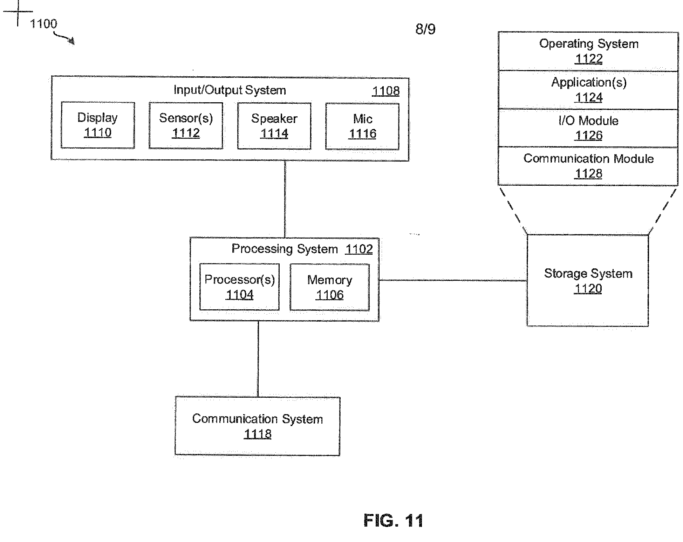

FIG. 11 illustrates an exemplary computing device 1100 for implementing various embodiments described above. For example, computing device 1100 may be used to implement client device 105. Computing device 1100 may be a cellphone, a smartphone, a wearable device, an activity tracker or manager, a tablet, a personal digital assistant (PDA), a media player, or any other type of mobile computing device or combination thereof. As shown in FIG. 11, computing device 1100 includes processing system 1102, input/output (I/O) system 1108, communication system 1118, and storage system 1120. These components may be coupled by one or more communication buses or signal lines.

Processing system 1102, which can be implemented as one or more integrated circuits (e.g., a conventional microprocessor or microcontroller), controls the operation of computing device 1100. As shown, processing system 1102 includes one or more processors 1104 and memory 1106. Processors 1104 are configured to run or execute various software and/or sets of instructions stored in memory 1106 to perform various functions for computing device 1100 and to process data.

Each processor of processors 1104 may include one processing unit (e.g., a single core processor) or several processing units (e.g., a multicore processor). In some embodiments, processors 1104 of processing system 1102 may be implemented as independent processors while, in other embodiments, processors 1104 of processing system 1102 may be implemented as multiple processors integrate into a single chip. Still, in some embodiments, processors 1104 of processing system 1102 may be implemented as a combination of independent processors and multiple processors integrated into a single chip.

Memory 1106 may be configured to receive and store software (e.g., operating system 1122, applications 1124, I/O module 1126; communication module 1128, etc. from storage system 1120) in the form of program instructions that are loadable and executable by processors 1104 as well as data generated during the execution of program instructions. In some embodiments, memory 1106 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 1108 is responsible for receiving input through various components and providing output through various components. As shown for this example, I/O system 1108 includes display 1110, one or more sensors 1112, speaker 1114, and microphone 1116. Display 1110 is configured to output visual information (e.g., a graphical user interface (GUI) generated and/or rendered by processors 1104). In some embodiments, display 1110 is a touch screen that is configured to also receive touch-based input. Display 1110 may be implemented using liquid crystal display (LCD) technology, light-emitting diode (LED) technology, organic LED (OLED) technology, organic electro luminescence (OEL) technology, or any other type of display technologies. Sensors 1112 may include any number of different types of sensors for measuring a physical quantity (e.g., temperature, force, pressure, acceleration, orientation, light, radiation, etc.). Speaker 1114 is configured to output audio information and microphone 1116 is configured to receive audio input. One of ordinary skill in the art will appreciate that I/O system 1108 may include any number of additional, fewer, and/or different components. For instance, I/O system 1108 may include a keypad or keyboard for receiving input, a port for transmitting data, receiving data and/or power, and/or communicating with another device or component, an image capture component for capturing photos and/or videos, etc.

Communication system 1118 serves as an interface for receiving data from, and transmitting data to, other devices, computer systems, and networks. For example, communication system 1118 may allow computing device 1100 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 1118 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 1118 may provide components configured for wired communication (e.g., Ethernet) in addition to or instead of components configured for wireless communication.

Storage system 1120 handles the storage and management of data for computing device 1100. Storage system 1120 may be implemented by one or more non-transitory machine-readable mediums that are configured to store software (e.g., programs, code modules, data constructs, instructions, etc.) and store data used for, or generated during, the execution of the software.

In this example, storage system 1120 includes operating system 1122, one or more applications 1124, I/O module 1126, and communication module 1128. Operating system 1122 includes various procedures, sets of instructions, software components and/or drivers for controlling and managing general system tasks (e.g., memory management, storage device control, power management, etc.) and facilitates communication between various hardware and software components. Operating system 1122 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Applications 1124 can include any number of different applications installed on computing device 1100. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 1126 manages information received via input components (e.g., display 1110, sensors 1112, and microphone 1116) and information to be outputted via output components (e.g., display 1110 and speaker 1114). Communication module 1128 facilitates communication with other devices via communication system 1118 and includes various software components for handling data received from communication system 1118.

One of ordinary skill in the art will realize that the architecture shown in FIG. 11 is only an example architecture of computing device 1100, and that computing device 1100 may have additional or fewer components than shown, or a different configuration of components. The various components shown in FIG. 11 may be implemented in hardware, software, firmware or any combination thereof, including one or more signal processing and/or application specific integrated circuits.

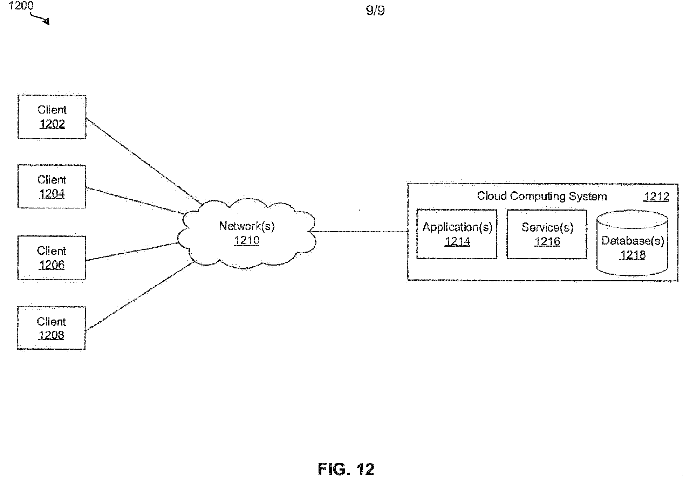

FIG. 12 illustrates an exemplary system 1200 for implementing various embodiments described above. For example, one of the client devices 1202-1208 may be used to implement client device 105 and cloud computing system may be used to implement computing system 110. As shown, system 1200 includes client devices 1202-1208, one or more networks 1210, and cloud computing system 1212. Cloud computing system 1212 is configured to provide resources and data to client devices 1202-1208 via networks 1210. In some embodiments, cloud computing system 1200 provides resources to any number of different users (e.g., customers, tenants, organizations, etc.). Cloud computing system 1212 may be implemented by one or more computer systems (e.g., servers), virtual machines operating on a computer system, or a combination thereof.

As shown, cloud computing system 1212 includes one or more applications 1214, one or more services 1216, and one or more databases 1218. Cloud computing system 1200 may provide applications 1214, services 1216, and databases 1218 to any number of different customers in a self-service, subscription-based, elastically scalable, reliable, highly available, and secure manner.

In some embodiments, cloud computing system 1200 may be adapted to automatically provision, manage, and track a customer's subscriptions to services offered by cloud computing system 1200. Cloud computing system 1200 may provide cloud services via different deployment models. For example, cloud services may be provided under a public cloud model in which cloud computing system 1200 is owned by an organization selling cloud services and the cloud services are made available to the general public or different industry enterprises. As another example, cloud services may be provided under a private cloud model in which cloud computing system 1200 is operated solely for a single organization and may provide cloud services for one or more entities within the organization. The cloud services may also be provided under a community cloud model in which cloud computing system 1200 and the cloud services provided by cloud computing system 1200 are shared by several organizations in a related community. The cloud services may also be provided under a hybrid cloud model, which is a combination of two or more of the aforementioned different models.

In some instances, any one of applications 1214, services 1216, and databases 1218 made available to client devices 1202-1208 via networks 1210 from cloud computing system 1212 is referred to as a "cloud service." Typically, servers and systems that make up cloud computing system 1212 are different from the on-premises servers and systems of a customer. For example, cloud computing system 1212 may host an application and a user of one of client devices 1202-1208 may order and use the application via networks 1210.

Applications 1214 may include software applications that are configured to execute on cloud computing system 1212 (e.g., a computer system or a virtual machine operating on a computer system) and be accessed, controlled, managed, etc. via client devices 1202-1208. In some embodiments, applications 1214 may include server applications and/or mid-tier applications (e.g., HTTP (hypertext transport protocol) server applications, FTP (file transfer protocol) server applications, CGI (common gateway interface) server applications, JAVA server applications, etc.). Services 1216 are software components, modules, application, etc. that are configured to execute on cloud computing system 1212 and provide functionalities to client devices 1202-1208 via networks 1210. Services 1216 may be web-based services or on-demand cloud services.

Databases 1218 are configured to store and/or manage data that is accessed by applications 1214, services 1216, and/or client devices 1202-1208. For instance, storages 145-160 may be stored in databases 1218. Databases 1218 may reside on a non-transitory storage medium local to (and/or resident in) cloud computing system 1212, in a storage-area network (SAN), on a non-transitory storage medium local located remotely from cloud computing system 1212. In some embodiments, databases 1218 may include relational databases that are managed by a relational database management system (RDBMS). Databases 1218 may be a column-oriented databases, row-oriented databases, or a combination thereof. In some embodiments, some or all of databases 1218 are in-memory databases. That is, in some such embodiments, data for databases 1218 are stored and managed in memory (e.g., random access memory (RAM)).

Client devices 1202-1208 are configured to execute and operate a client application (e.g., a web browser, a proprietary client application, etc.) that communicates with applications 1214, services 1216, and/or databases 1218 via networks 1210. This way, client devices 1202-1208 may access the various functionalities provided by applications 1214, services 1216, and databases 1218 while applications 1214, services 1216, and databases 1218 are operating (e.g., hosted) on cloud computing system 1200. Client devices 1202-1208 may be computer system 1000 or computing device 1100, as described above by reference to FIGS. 10 and 11, respectively. Although system 1200 is shown with four client devices, any number of client devices may be supported.

Networks 1210 may be any type of network configured to facilitate data communications among client devices 1202-1208 and cloud computing system 1212 using any of a variety of network protocols. Networks 1210 may be a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

## Claims

1. A non-transitory machine-readable medium storing a program executable by at least one processing unit of a device, the program comprising sets of instructions for:
receiving one or more images of a document from a client device (105) for processing
detecting, by an image processor (120), texts in the one or more images;
generating, by the image processor (120), a data object (300;400; 500) based on the detected texts, wherein the image processor (120) generates the data object (300; 400; 500) for the received image based on an expense data object definition (200), the expense data object definition (200) including attributes for a category (205) and a subcategory (210);
storing, by the image processor (120), the data object (300; 400; 500) and the detected texts in an application data storage (145);
retrieving, by a data derivation manager (125), the data object (300; 400; 500) associated with a defined category (305; 405; 505);
determining, by the data derivation manager (125), that the category is a transport category;
determining a subcategory (310; 410; 510) of the defined category associated with the data object, the subcategory being an airfare subcategory, a ground transport subcategory, or a car rental subcategory;
determining a set of machine learning, ML, models (155; 605; 610; 720; 805; 810) based on the subcategory of the defined category associated with the data object (300;400; 500);
using the set of machine learning models (155) to determine distance values; and
accessing, by the data derivation manager (125), a gas emissions data storage (160) to retrieve a defined set of gas emissions data (615; 735; 815);
based on the distance values and the defined set of gas emissions data (615; 735; 815), deriving gas emissions data values (620; 740; 820) associated with the data object (300; 400; 500), the gas emissions data values (620; 740; 820) being an amount of produced gas emissions.

2. The non-transitory machine-readable medium of claim 1, wherein the data object (300; 400; 500) comprises a third set of data (315-330; 415-430; 515-530), the third set of data including attributes for a country (315; 415; 515), a vendor name (320; 420; 520), an amount (325; 425; 525), and a currency (330; 430; 530), wherein determining the set of machine learning models comprises,
upon determining that the subcategory (310; 410; 510) of the defined category (305; 405; 505) associated with the data object is a first subcategory (410; 510) being the airfare subcategory or the car rental subcategory in a plurality of defined subcategories (310; 410; 510), including a first model (720; 810) being an Airfare ML model or a car rental ML model configured to predict the distance values based on the third set of data (315-330; 415-430; 515-530) of the data object in the set of machine learning models.

3. The non-transitory machine-readable medium of claim 2, wherein determining the set of machine learning models (155) further comprises,
upon determining that the subcategory of the defined category associated with the data object is a second subcategory being the ground transport subcategory in the plurality of defined subcategories (310; 410; 510), including in the set of machine learning models (i) to (iii) below:
(i) a second machine learning model (600) configured to predict a type of the second subcategory associated with the data object based on a subset of the third set of data associated with the data object, the type of the second subcategory including a taxi transport type, a bus transport type, a subway transport type, a train transport type;
(ii) a third machine learning model (605) configured to predict the distance values based on the third set of data (315-330; 415-430; 515-530) of the data object in the set of machine learning models, and
(iii) a fourth machine learning model (610) configured to predict the distance values based on the third set of data (315-330) of the data object, the fourth machine learning model (610) being a default transport type ML model (610).

4. The non-transitory machine-readable medium of claim 3, wherein using the set of machine learning models to determine the distance values comprises,
upon determining that the predicted type of the second subcategory associated with the data object is a first type having its own ML model, using the third machine learning model (605) being the own ML model to determine the distance values.

5. The non-transitory machine-readable medium of claim 3 or 4, wherein using the set of machine learning models to determine the distance values further comprises:
upon determining that the predicted type of the second subcategory associated with the data object is a second type which does not have its own ML model, using the fourth machine learning model being the default transport type ML model (610) to determine the distance values.

6. The non-transitory machine-readable medium of any one of claims 3 to 5, wherein using the set of machine learning models to determine the distance values comprises:
determining, by a distance manager (135), whether the distance values can be determined based on a regular expression; and
upon determining that the distance values can be determined based on the regular expression, using the regular expression to determine the distance values instead of using the third machine learning model being the own ML model to determine the distance values.

7. The non-transitory machine-readable medium of any one of the preceding claims, wherein deriving the gas emissions data values comprises:
determining a set of different amounts of gas emissions produced for different distances based on a subset of the third set of data values (315-330; 415-430; 515-530); and
deriving the gas emissions data values based further on the set of defined data.

8. A computer-implemented method (900) comprising:
receiving one or more images a document from a client device (105) for processing
detecting, by an image processor (120), texts in the one or more images;
generating, by the image processor (120), a data object (300;400; 500) based on the detected texts, wherein the image processor (120) generates the data object (300; 400; 500) for the received image based on an expense data object definition (200), the expense data object definition (200) including attributes for a category (205) and a subcategory (210);
storing, by the image processor (120), the data object (300; 400; 500) and the detected texts in an application data storage (145);
retrieving (910), by a data derivation manager (125), the data object associated with a defined category;
determining, by the data derivation manager (125), that the category is a transport category;
determining (920) a subcategory of the defined category associated with the data object, the subcategory being an airfare subcategory, a ground transport subcategory, or a car rental subcategory;
determining (930) a set of machine learning, ML, models (155; 605; 610; 720; 805; 810) based on the subcategory of the defined category associated with the data object (300;400; 500);
using (940) the set of machine learning models to determine a distance values; and
accessing, by the data derivation manager (125), a gas emissions data storage (160) to retrieve a defined set of gas emissions data (615; 735; 815);
based on the distance values and the defined set of gas emissions data (615; 735; 815), deriving (950) gas emissions data values associated with the data object (300; 400; 500), the gas emissions data values (620; 740; 820) being an amount of produced gas emissions.

9. The computer-implemented method of claim 8, wherein the data object (300; 400; 500) comprises a third set of data (315-330; 415-430; 515-530), the third set of data including attributes for a country (315; 415; 515), a vendor name (320; 420; 520), an amount (325; 425; 525), and a currency (330; 430; 530);
wherein determining the set of machine learning models comprises,
upon determining that the subcategory (310; 410; 510) of the defined category (305; 405; 505) associated with the data object is a first subcategory (410; 510) being the airfare subcategory or the car rental subcategory in a plurality of defined subcategories, including a first model (720; 810) being an Airfare ML model or a car rental ML model configured to predict the distance values based on the third set of data (315-330; 415-430; 515-530) of the data object in the set of machine learning models.

10. The computer-implemented method of claim 9, wherein determining the set of machine learning models further comprises,
upon determining that the subcategory of the defined category associated with the data object is a second subcategory being the ground transport subcategory in the plurality of defined subcategories (310; 410; 510), including in the set of machine learning models (i) to (iii) below:
(i) a second machine learning model (600) configured to predict a type of the second subcategory associated with the data object based on a subset of the third set of data associated with the data object, the type of the second subcategory including a taxi transport type, a bus transport type, a subway transport type, a train transport type;
(ii) a third machine learning model (605) configured to predict the distance values based on the third set of data (315-330; 415-430; 515-530) of the data object in the set of machine learning models, and
(iii) a fourth machine learning model (610) configured to predict the distance values based on the third set of data of the data object, the fourth machine learning model (610) being a default transport type ML model (610).

11. The computer-implemented method of claim 10, wherein using the set of machine learning models to determine the distance values comprises,
upon determining that the predicted type of the second subcategory associated with the data object is a first type having its own ML model, using the third machine learning model (605) being the own ML model to determine the distance values.

12. The computer-implemented method of claim 10 or 11, wherein using the set of machine learning models to determine the distance values further comprises:
upon determining that the predicted type of the second subcategory associated with the data object is a second type which does not have its own ML model, using the fourth machine learning model being the default transport type ML model (610) to determine the distance values.

13. The computer-implemented method of any one of claims 10 to 12, wherein using the set of machine learning models to determine the distance values comprises:
determining, by a distance manager (135), whether the distance values can be determined based on a regular expression; and
upon determining that the distance values can be determined based on the regular expression, using the regular expression to determine the distance values instead of using the third machine learning model being the own ML model to determine the distance values.

14. The method of any one of claims 8 to 13, wherein deriving the gas emissions data values comprises:
determining a set of different amounts of gas emissions produced for different distances based on a subset of the third set of data values (315-330; 415-430; 515-530); and
deriving the gas emissions data values based further on the set of defined data.

15. A system comprising:
a set of processing units; and
a non-transitory machine-readable medium storing instructions that when executed by at least one processing unit in the set of processing units cause the at least one processing unit to carry out the computer-implemented method of any one of claims 8 to 14.

## Patentansprüche

1. Nicht-flüchtiges maschinenlesbares Medium, das ein Programm speichert, das durch mindestens eine Verarbeitungseinheit einer Vorrichtung ausführbar ist, wobei das Programm Sätze von Anweisungen zum:
Empfangen eines Bilds oder mehrerer Bilder eines Dokuments von einer Client-Vorrichtung (105) zum Verarbeiten;
Erfassen, durch eine Bildverarbeitungseinrichtung (120), von Texten in dem einen oder den mehreren Bild(ern);
Erzeugen, durch die Bildverarbeitungseinrichtung (120), eines Datenobjekts (300; 400; 500) auf der Basis der erfassten Texte, wobei die Bildverarbeitungseinrichtung (120) das Datenobjekt (300; 400; 500) für das empfangene Bild auf der Basis einer Kostendatenobjektdefinition (200) erzeugt, wobei die Kostendatenobjektdefinition (200) Eigenschaften für eine Kategorie (205) und eine Unterkategorie (210) umfasst;
Speichern, durch die Bildverarbeitungseinrichtung (120), des Datenobjekts (300; 400; 500) und der erfassten Texte in einem Anwendungsdatenspeicher (145);
Abfragen, durch einen Datenableitungsverwalter (125), des Datenobjekts (300; 400; 500), das mit einer festgelegten Kategorie (305; 405; 505) zusammenhängt;
Bestimmen, durch den Datenableitungsverwalter (125), dass die Kategorie eine Transportkategorie ist;
Bestimmen einer Unterkategorie (310; 410; 510) der festgelegten Kategorie, die mit dem Datenobjekt zusammenhängt, wobei die Unterkategorie eine Flugkosten-Unterkategorie, eine Straßentransport-Unterkategorie oder eine Autovermietung-Unterkategorie ist;
Bestimmen eines Satzes von Maschinenlern, ML, -Modellen (155; 605; 610; 720; 805; 810) auf der Basis der Unterkategorie der festgelegten Kategorie, die mit dem Datenobjekt (300; 400; 500) zusammenhängt;
Verwenden des Satzes von Maschinenlernmodellen (155) zum Bestimmen von Distanzwerten; und
Zugreifen, durch den Datenableitungsverwalter (125), auf einen Gasemissionsdatenspeicher (160) zum Abfragen eines festgelegten Satzes von Gasemissionsdaten (615; 735; 815);
auf der Basis der Distanzwerte und des festgelegten Satzes von Gasemissionsdaten (615; 735; 815), Ableiten von Gasemissionsdatenwerten (620; 740; 820), die mit dem Datenobjekt (300; 400; 500) zusammenhängen, wobei die Gasemissionsdatenwerte (620; 740; 820) eine Menge von erzeugten Gasemissionen sind,
umfasst.

2. Nicht-flüchtiges maschinenlesbares Medium nach Anspruch 1, wobei das Datenobjekt (300; 400; 500) einen dritten Satz von Daten (315-330; 415-430; 515-530) umfasst, wobei der dritte Satz von Daten Eigenschaften für ein Land (315; 415; 515), einen Verkäufernamen (320; 420; 520), eine Menge (325; 425; 525) und eine Währung (330; 430; 530) umfasst, wobei das Bestimmen des Satzes von Maschinenlernmodellen,
nach dem Bestimmen, dass die Unterkategorie (310; 410; 510) der festgelegten Kategorie (305; 405; 505), die mit dem Datenobjekt zusammenhängt, eine erste Unterkategorie (410; 510), welche die Flugkosten-Unterkategorie oder die Autovermietung-Unterkategorie ist, in einer Mehrzahl von festgelegten Unterkategorien (310; 410; 510) ist, das Einbeziehen eines ersten Modells (720; 810), das ein Flugkosten-ML-Modell oder ein Autovermietung-ML-Modell ist, das zum Vorhersagen der Distanzwerte auf der Basis des dritten Satzes von Daten (315-330; 415-430; 515-530) des Datenobjekts ausgebildet ist, in den Satz von Maschinenlernmodellen umfasst.

3. Nicht-flüchtiges maschinenlesbares Medium nach Anspruch 2, wobei das Bestimmen des Satzes von Maschinenlernmodellen (155) ferner,
nach dem Bestimmen, dass die Unterkategorie der festgelegten Kategorie, die mit dem Datenobjekt zusammenhängt, eine zweite Unterkategorie, welche die Straßentransport-Unterkategorie ist, in der Mehrzahl von festgelegten Unterkategorien (310; 410; 510) ist, das Einbeziehen der nachstehenden (i) bis (iii) in den Satz von Maschinenlernmodellen umfasst:
(i) eines zweiten Maschinenlernmodells (600), das zum Vorhersagen eines Typs der zweiten Unterkategorie, die mit dem Datenobjekt zusammenhängt, auf der Basis eines Teilsatzes des dritten Satzes von Daten, der mit dem Datenobjekt zusammenhängt, ausgebildet ist, wobei der Typ der zweiten Unterkategorie einen Taxitransport-Typ, einen Bustransport-Typ, einen U-Bahn-Transport-Typ, einen Zug-Transport-Typ umfasst;
(ii) eines dritten Maschinenlernmodells (605), das zum Vorhersagen der Distanzwerte auf der Basis des dritten Satzes von Daten (315-330; 415-430; 515-530) des Datenobjekts in dem Satz von Maschinenlernmodellen ausgebildet ist, und
(iii) eines vierten Maschinenlernmodells (610), das zum Vorhersagen der Distanzwerte auf der Basis des dritten Satzes von Daten (315-330) des Datenobjekts ausgebildet ist, wobei das vierte Maschinenlernmodell (610) ein Standardtransport-Typ-ML-Modell (610) ist.

4. Nicht-flüchtiges maschinenlesbares Medium nach Anspruch 3, wobei das Verwenden des Satzes von Maschinenlernmodellen zum Bestimmen der Distanzwerte,
nach dem Bestimmen, dass der prognostizierte Typ der zweiten Unterkategorie, der mit dem Datenobjekt zusammenhängt, ein erster Typ ist, der dessen eigenes ML-Modell aufweist, das Verwenden des dritten Maschinenlernmodells (605), welches das eigene ML-Modell ist, zum Bestimmen der Distanzwerte umfasst.

5. Nicht-flüchtiges maschinenlesbares Medium nach Anspruch 3 oder 4, wobei das Verwenden des Satzes von Maschinenlernmodellen zum Bestimmen der Distanzwerte ferner umfasst:
nach dem Bestimmen, dass der prognostizierte Typ der zweiten Unterkategorie, der mit dem Datenobjekt zusammenhängt, ein zweiter Typ ist, der nicht dessen eigenes ML-Modell aufweist, das Verwenden des vierten Maschinenlernmodells, welches das Standardtransport-Typ-ML-Modell (610) zum Bestimmen der Distanzwerte ist.

6. Nicht-flüchtiges maschinenlesbares Medium nach einem der Ansprüche 3 bis 5, wobei das Verwenden des Satzes von Maschinenlernmodellen zum Bestimmen der Distanzwerte umfasst:
Bestimmen, durch einen Distanzverwalter (135), ob die Distanzwerte auf der Basis eines regulären Ausdrucks bestimmt werden können; und
nach dem Bestimmen, dass die Distanzwerte auf der Basis des regulären Ausdrucks bestimmt werden können, Verwenden des regulären Ausdrucks zum Bestimmen der Distanzwerte anstatt des Verwendens des dritten Maschinenlernmodells, welches das eigene ML-Modell zum Bestimmen der Distanzwerte ist.

7. Nicht-flüchtiges maschinenlesbares Medium nach einem der vorhergehenden Ansprüche, wobei das Ableiten der Gasemissionsdatenwerte umfasst:
Bestimmen eines Satzes von verschiedenen Mengen von Gasemissionen, die für verschiedene Distanzen erzeugt werden, auf der Basis eines Teilsatzes des dritten Satzes von Datenwerten (315-330; 415-430; 515-530); und
Ableiten der Gasemissionsdatenwerte ferner auf der Basis des Satzes von festgelegten Daten.

8. Computerimplementiertes Verfahren (900), umfassend:
Empfangen eines Bilds oder mehrerer Bilder eines Dokuments von einer Client-Vorrichtung (105) zum Verarbeiten;
Erfassen, durch eine Bildverarbeitungseinrichtung (120), von Texten in dem einen oder den mehreren Bild(ern);
Erzeugen, durch die Bildverarbeitungseinrichtung (120), eines Datenobjekts (300; 400; 500) auf der Basis der erfassten Texte, wobei die Bildverarbeitungseinrichtung (120) das Datenobjekt (300; 400; 500) für das empfangene Bild auf der Basis einer Kostendatenobjektdefinition (200) erzeugt, wobei die Kostendatenobjektdefinition (200) Eigenschaften für eine Kategorie (205) und eine Unterkategorie (210) umfasst;
Speichern, durch die Bildverarbeitungseinrichtung (120), des Datenobjekts (300; 400; 500) und der erfassten Texte in einem Anwendungsdatenspeicher (145);
Abfragen (910), durch einen Datenableitungsverwalter (125), des Datenobjekts, das mit einer festgelegten Kategorie zusammenhängt;
Bestimmen, durch den Datenableitungsverwalter (125), dass die Kategorie eine Transportkategorie ist;
Bestimmen (920) einer Unterkategorie der festgelegten Kategorie, die mit dem Datenobjekt zusammenhängt, wobei die Unterkategorie eine Flugkosten-Unterkategorie, eine Straßentransport-Unterkategorie oder eine Autovermietung-Unterkategorie ist;
Bestimmen (930) eines Satzes von Maschinenlern, ML, -Modellen (155; 605; 610; 720; 805; 810) auf der Basis der Unterkategorie der festgelegten Kategorie, die mit dem Datenobjekt (300; 400; 500) zusammenhängt;
Verwenden (940) des Satzes von Maschinenlernmodellen zum Bestimmen von Distanzwerten; und
Zugreifen, durch den Datenableitungsverwalter (125), auf einen Gasemissionsdatenspeicher (160) zum Abfragen eines festgelegten Satzes von Gasemissionsdaten (615; 735; 815);
auf der Basis der Distanzwerte und des festgelegten Satzes von Gasemissionsdaten (615; 735; 815), Ableiten (950) von Gasemissionsdatenwerten, die mit dem Datenobjekt (300; 400; 500) zusammenhängen, wobei die Gasemissionsdatenwerte (620; 740; 820) eine Menge von erzeugten Gasemissionen sind.

9. Computerimplementiertes Verfahren nach Anspruch 8, wobei das Datenobjekt (300; 400; 500) einen dritten Satz von Daten (315-330; 415-430; 515-530) umfasst, wobei der dritte Satz von Daten Eigenschaften für ein Land (315; 415; 515), einen Verkäufernamen (320; 420; 520), eine Menge (325; 425; 525) und eine Währung (330; 430; 530) umfasst;
wobei das Bestimmen des Satzes von Maschinenlernmodellen,
nach dem Bestimmen, dass die Unterkategorie (310; 410; 510) der festgelegten Kategorie (305; 405; 505), die mit dem Datenobjekt zusammenhängt, eine erste Unterkategorie (410; 510), welche die Flugkosten-Unterkategorie oder die Autovermietung-Unterkategorie ist, in einer Mehrzahl von festgelegten Unterkategorien ist, das Einbeziehen eines ersten Modells (720; 810), das ein Flugkosten-ML-Modell oder ein Autovermietung-ML-Modell ist, das zum Vorhersagen der Distanzwerte auf der Basis des dritten Satzes von Daten (315-330; 415-430; 515-530) des Datenobjekts ausgebildet ist, in den Satz von Maschinenlernmodellen umfasst.

10. Computerimplementiertes Verfahren nach Anspruch 9, wobei das Bestimmen des Satzes von Maschinenlernmodellen ferner,
nach dem Bestimmen, dass die Unterkategorie der festgelegten Kategorie, die mit dem Datenobjekt zusammenhängt, eine zweite Unterkategorie, welche die Straßentransport-Unterkategorie ist, in der Mehrzahl von festgelegten Unterkategorien (310; 410; 510) ist, das Einbeziehen der nachstehenden (i) bis (iii) in den Satz von Maschinenlernmodellen umfasst:
(i) eines zweiten Maschinenlernmodells (600), das zum Vorhersagen eines Typs der zweiten Unterkategorie, die mit dem Datenobjekt zusammenhängt, auf der Basis eines Teilsatzes des dritten Satzes von Daten, der mit dem Datenobjekt zusammenhängt, ausgebildet ist, wobei der Typ der zweiten Unterkategorie einen Taxitransport-Typ, einen Bustransport-Typ, einen U-Bahn-Transport-Typ, einen Zug-Transport-Typ umfasst;
(ii) eines dritten Maschinenlernmodells (605), das zum Vorhersagen der Distanzwerte auf der Basis des dritten Satzes von Daten (315-330; 415-430; 515-530) des Datenobjekts in dem Satz von Maschinenlernmodellen ausgebildet ist, und
(iii) eines vierten Maschinenlernmodells (610), das zum Vorhersagen der Distanzwerte auf der Basis des dritten Satzes von Daten des Datenobjekts ausgebildet ist, wobei das vierte Maschinenlernmodell (610) ein Standardtransport-Typ-ML-Modell (610) ist.

11. Computerimplementiertes Verfahren nach Anspruch 10, wobei das Verwenden des Satzes von Maschinenlernmodellen zum Bestimmen der Distanzwerte,
nach dem Bestimmen, dass der prognostizierte Typ der zweiten Unterkategorie, der mit dem Datenobjekt zusammenhängt, ein erster Typ ist, der dessen eigenes ML-Modell aufweist, das Verwenden des dritten Maschinenlernmodells (605), welches das eigene ML-Modell ist, zum Bestimmen der Distanzwerte umfasst.

12. Computerimplementiertes Verfahren nach Anspruch 10 oder 11, wobei das Verwenden des Satzes von Maschinenlernmodellen zum Bestimmen der Distanzwerte ferner umfasst:
nach dem Bestimmen, dass der prognostizierte Typ der zweiten Unterkategorie, der mit dem Datenobjekt zusammenhängt, ein zweiter Typ ist, der nicht dessen eigenes ML-Modell aufweist, das Verwenden des vierten Maschinenlernmodells, welches das Standardtransport-Typ-ML-Modell (610) zum Bestimmen der Distanzwerte ist.

13. Computerimplementiertes Verfahren nach einem der Ansprüche 10 bis 12, wobei das Verwenden des Satzes von Maschinenlernmodellen zum Bestimmen der Distanzwerte umfasst:
Bestimmen, durch einen Distanzverwalter (135), ob die Distanzwerte auf der Basis eines regulären Ausdrucks bestimmt werden können; und
nach dem Bestimmen, dass die Distanzwerte auf der Basis des regulären Ausdrucks bestimmt werden können, Verwenden des regulären Ausdrucks zum Bestimmen der Distanzwerte anstatt des Verwendens des dritten Maschinenlernmodells, welches das eigene ML-Modell zum Bestimmen der Distanzwerte ist.

14. Verfahren nach einem der Ansprüche 8 bis 13, wobei das Ableiten der Gasemissionsdatenwerte umfasst:
Bestimmen eines Satzes von verschiedenen Mengen von Gasemissionen, die für verschiedene Distanzen erzeugt werden, auf der Basis eines Teilsatzes des dritten Satzes von Datenwerten (315-330; 415-430; 515-530); und
Ableiten der Gasemissionsdatenwerte ferner auf der Basis des Satzes von festgelegten Daten.

15. System, umfassend:
einen Satz von Verarbeitungseinheiten; und
ein nicht-flüchtiges maschinenlesbares Medium, das Anweisungen speichert, die, wenn sie durch mindestens eine Verarbeitungseinheit in dem Satz von Verarbeitungseinheiten ausgeführt werden, bewirken, dass die mindestens eine Verarbeitungseinheit das computerimplementierte Verfahren nach einem der Ansprüche 8 bis 14 ausführt.

## Revendications

1. Un support lisible par machine non transitoire stockant un programme exécutable par au moins une unité de traitement d'un dispositif, le programme comprenant des ensembles d'instructions pour :
recevoir une ou plusieurs images d'un document provenant d'un dispositif client (105) à des fins de traitement ;
détecter, par un processeur d'images (120), des textes dans la ou les images ;
générer, par le processeur d'images (120), un objet de données (300 ; 400 ; 500) basé sur les textes détectés, sachant que le processeur d'images (120) génère l'objet de données (300 ; 400 ; 500) pour l'image reçue sur la base d'une définition d'objet de données de dépenses (200), la définition d'objet de données de dépenses (200) incluant des attributs pour une catégorie (205) et une sous-catégorie (210) ;
stocker, par le processeur d'image (120), l'objet de données (300 ; 400 ; 500) et les textes détectés dans une mémoire de stockage de données d'application (145) ;
récupérer, par un gestionnaire de dérivation de données (125), l'objet de données (300 ; 400 ; 500) associé à une catégorie définie (305 ; 405 ; 505) ;
déterminer, par le gestionnaire de dérivation de données (125), que la catégorie est une catégorie de transport ;
déterminer une sous-catégorie (310 ; 410 ; 510) de la catégorie définie associée à l'objet de données, la sous-catégorie étant une sous-catégorie de transport aérien, une sous-catégorie de transport terrestre ou une sous-catégorie de location de voiture ;
déterminer un ensemble de modèles d'apprentissage automatique (*machine learning -* ML) (155 ; 605 ; 610 ; 720 ; 805 ; 810) sur la base de la sous-catégorie de la catégorie définie associée à l'objet de données (300 ; 400 ; 500) ;
utiliser l'ensemble de modèles d'apprentissage automatique (155) pour déterminer des valeurs de distance ; et pour
accéder, par le gestionnaire de dérivation de données (125), à une mémoire de stockage de données d'émissions de gaz (160) afin de récupérer un ensemble défini de données d'émissions de gaz (615 ; 735 ; 815) ;
sur la base des valeurs de distance et de l'ensemble défini de données d'émissions de gaz (615 ; 735 ; 815), dériver des valeurs de données d'émissions de gaz (620 ; 740 ; 820) associées à l'objet de données (300 ; 400 ; 500), les valeurs de données d'émissions de gaz (620 ; 740 ; 820) étant une quantité d'émissions de gaz produites.

2. Le support lisible par machine non transitoire d'après la revendication 1, sachant que l'objet de données (300 ; 400 ; 500) comprend un troisième ensemble de données (315-330 ; 415-430 ; 515-530), le troisième ensemble de données incluant des attributs pour un pays (315 ; 415 ; 515), un nom de fournisseur (320 ; 420 ; 520), un montant (325 ; 425 ; 525) et une devise (330 ; 430 ; 530), sachant que le fait de déterminer l'ensemble de modèles d'apprentissage automatique comprend,
après avoir déterminé que la sous-catégorie (310 ; 410 ; 510) de la catégorie définie (305 ; 405 ; 505) associée à l'objet de données est une première sous-catégorie (410 ; 510) qui est la sous-catégorie de transport aérien ou la sous-catégorie de location de voitures dans une pluralité de sous-catégories définies (310 ; 410 ; 510), le fait d'inclure un premier modèle (720 ; 810) qui est un modèle ML de transport aérien ou un modèle ML de location de voiture configuré pour prédire les valeurs de distance sur la base du troisième ensemble de données (315-330 ; 415-430 ; 515-530) de l'objet de données dans l'ensemble de modèles d'apprentissage automatique.

3. Le support lisible par machine non transitoire d'après la revendication 2, sachant que le fait de déterminer l'ensemble de modèles d'apprentissage automatique (155) comprend en outre,
après avoir déterminé que la sous-catégorie de la catégorie définie associée à l'objet de données est une deuxième sous-catégorie qui est la sous-catégorie de transport terrestre dans la pluralité de sous-catégories définies (310 ; 410 ; 510), le fait d'inclure dans l'ensemble de modèles d'apprentissage automatique (i) à (iii) ci-dessous :
(i) un deuxième modèle d'apprentissage automatique (600) configuré pour prédire un type de la deuxième sous-catégorie associée à l'objet de données sur la base d'un sous-ensemble du troisième ensemble de données associé à l'objet de données, le type de la deuxième sous-catégorie incluant un type de transport par taxi, un type de transport par bus, un type de transport par métro, un type de transport par train ;
(ii) un troisième modèle d'apprentissage automatique (605) configuré pour prédire les valeurs de distance sur la base du troisième ensemble de données (315-330 ; 415-430 ; 515-530) de l'objet de données dans l'ensemble de modèles d'apprentissage automatique, et
(iii) un quatrième modèle d'apprentissage automatique (610) configuré pour prédire les valeurs de distance sur la base du troisième ensemble de données (315-330) de l'objet de données, le quatrième modèle d'apprentissage automatique (610) étant un modèle ML de type de transport par défaut (610).

4. Le support lisible par machine non transitoire d'après la revendication 3, sachant que le fait d'utiliser l'ensemble de modèles d'apprentissage automatique pour déterminer les valeurs de distance comprend,
après avoir déterminé que le type prédit de la deuxième sous-catégorie associée à l'objet de données est un premier type présentant son propre modèle ML, le fait d'utiliser le troisième modèle d'apprentissage automatique (605) étant ledit modèle ML propre pour déterminer les valeurs de distance.

5. Le support lisible par machine non transitoire d'après la revendication 3 ou 4, sachant que le fait d'utiliser l'ensemble de modèles d'apprentissage automatique pour déterminer les valeurs de distance comprend en outre :
après avoir déterminé que le type prédit de la deuxième sous-catégorie associée à l'objet de données est un deuxième type qui n'a pas son propre modèle ML, le fait d'utiliser le quatrième modèle d'apprentissage automatique qui est le modèle ML de type de transport par défaut (610) pour déterminer les valeurs de distance.

6. Le support lisible par machine non transitoire d'après l'une quelconque des revendications de 3 à 5, sachant que le fait d'utiliser l'ensemble de modèles d'apprentissage automatique pour déterminer les valeurs de distance comprend le fait de :
déterminer, par un gestionnaire de distance (135), si les valeurs de distance peuvent être déterminées sur la base d'une expression régulière ; et
après avoir déterminé que les valeurs de distance peuvent être déterminées sur la base de l'expression régulière, d'utiliser l'expression régulière pour déterminer les valeurs de distance au lieu d'utiliser le troisième modèle d'apprentissage automatique qui est le modèle ML propre pour déterminer les valeurs de distance.

7. Le support lisible par machine non transitoire d'après l'une quelconque des revendications précédentes, sachant que le fait de dériver les valeurs de données d'émissions de gaz comprend le fait de :
déterminer un ensemble de quantités différentes d'émissions de gaz produites pour différentes distances sur la base d'un sous-ensemble du troisième ensemble de valeurs de données (315-330 ; 415-430 ; 515-530) ; et de
dériver les valeurs de données d'émissions de gaz en se fondant en outre sur l'ensemble de données définies.

8. Un procédé mis en œuvre par ordinateur (900) comprenant le fait de :
recevoir une ou plusieurs images d'un document provenant d'un dispositif client (105) à des fins de traitement ;
détecter, par un processeur d'images (120), des textes dans la ou les images ;
générer, par le processeur d'images (120), un objet de données (300 ; 400 ; 500) basé sur les textes détectés, sachant que le processeur d'images (120) génère l'objet de données (300 ; 400 ; 500) pour l'image reçue sur la base d'une définition d'objet de données de dépenses (200), la définition d'objet de données de dépenses (200) incluant des attributs pour une catégorie (205) et une sous-catégorie (210) ;
stocker, par le processeur d'image (120), l'objet de données (300 ; 400 ; 500) et les textes détectés dans une mémoire de stockage de données d'application (145) ;
récupérer (910), par un gestionnaire de dérivation de données (125), l'objet de données associé à une catégorie définie ;
déterminer, par le gestionnaire de dérivation de données (125), que la catégorie est une catégorie de transport ;
déterminer (920) une sous-catégorie de la catégorie définie associée à l'objet de données, la sous-catégorie étant une sous-catégorie de transport aérien, une sous-catégorie de transport terrestre ou une sous-catégorie de location de voiture ;
déterminer (930) un ensemble de modèles d'apprentissage automatique (*machine learning -* ML) (155 ; 605 ; 610 ; 720 ; 805 ; 810) sur la base de la sous-catégorie de la catégorie définie associée à l'objet de données (300 ; 400 ; 500) ;
utiliser (940) l'ensemble de modèles d'apprentissage automatique pour déterminer des valeurs de distance ; et de
accéder, par le gestionnaire de dérivation de données (125), à une mémoire de stockage de données d'émissions de gaz (160) afin de récupérer un ensemble défini de données d'émissions de gaz (615 ; 735 ; 815) ;
sur la base des valeurs de distance et de l'ensemble défini de données d'émissions de gaz (615 ; 735 ; 815), dériver (950) des valeurs de données d'émissions de gaz associées à l'objet de données (300 ; 400 ; 500), les valeurs de données d'émissions de gaz (620 ; 740 ; 820) étant une quantité d'émissions de gaz produites.

9. Le procédé mis en œuvre par ordinateur d'après la revendication 8, sachant que l'objet de données (300 ; 400 ; 500) comprend un troisième ensemble de données (315-330 ; 415-430 ; 515-530), le troisième ensemble de données incluant des attributs pour un pays (315 ; 415 ; 515), un nom de fournisseur (320 ; 420 ; 520), un montant (325 ; 425 ; 525) et une devise (330 ; 430 ; 530),
sachant que le fait de déterminer l'ensemble de modèles d'apprentissage automatique comprend,
après avoir déterminé que la sous-catégorie (310 ; 410 ; 510) de la catégorie définie (305 ; 405 ; 505) associée à l'objet de données est une première sous-catégorie (410 ; 510) qui est la sous-catégorie de transport aérien ou la sous-catégorie de location de voitures dans une pluralité de sous-catégories définies, le fait d'inclure un premier modèle (720 ; 810) qui est un modèle ML de transport aérien ou un modèle ML de location de voiture configuré pour prédire les valeurs de distance sur la base du troisième ensemble de données (315-330 ; 415-430 ; 515-530) de l'objet de données dans l'ensemble de modèles d'apprentissage automatique.

10. Le procédé mis en œuvre par ordinateur d'après la revendication 9, sachant que le fait de déterminer l'ensemble de modèles d'apprentissage automatique comprend en outre,
après avoir déterminé que la sous-catégorie de la catégorie définie associée à l'objet de données est une deuxième sous-catégorie qui est la sous-catégorie de transport terrestre dans la pluralité de sous-catégories définies (310 ; 410 ; 510), le fait d'inclure dans l'ensemble de modèles d'apprentissage automatique (i) à (iii) ci-dessous :
(i) un deuxième modèle d'apprentissage automatique (600) configuré pour prédire un type de la deuxième sous-catégorie associée à l'objet de données sur la base d'un sous-ensemble du troisième ensemble de données associé à l'objet de données, le type de la deuxième sous-catégorie incluant un type de transport par taxi, un type de transport par bus, un type de transport par métro, un type de transport par train ;
(ii) un troisième modèle d'apprentissage automatique (605) configuré pour prédire les valeurs de distance sur la base du troisième ensemble de données (315-330 ; 415-430 ; 515-530) de l'objet de données dans l'ensemble de modèles d'apprentissage automatique, et
(iii) un quatrième modèle d'apprentissage automatique (610) configuré pour prédire les valeurs de distance sur la base du troisième ensemble de données de l'objet de données, le quatrième modèle d'apprentissage automatique (610) étant un modèle ML de type de transport par défaut (610).

11. Le procédé mis en œuvre par ordinateur d'après la revendication 10, sachant que le fait d'utiliser l'ensemble de modèles d'apprentissage automatique pour déterminer les valeurs de distance comprend,
après avoir déterminé que le type prédit de la deuxième sous-catégorie associée à l'objet de données est un premier type présentant son propre modèle ML, le fait d'utiliser le troisième modèle d'apprentissage automatique (605) étant ledit modèle ML propre pour déterminer les valeurs de distance.

12. Le procédé mis en œuvre par ordinateur d'après la revendication 10 ou 11, sachant que le fait d'utiliser l'ensemble de modèles d'apprentissage automatique pour déterminer les valeurs de distance comprend en outre :
après avoir déterminé que le type prédit de la deuxième sous-catégorie associée à l'objet de données est un deuxième type qui n'a pas son propre modèle ML, le fait d'utiliser le quatrième modèle d'apprentissage automatique qui est le modèle ML de type de transport par défaut (610) pour déterminer les valeurs de distance.

13. Le procédé mis en œuvre par ordinateur d'après l'une quelconque des revendications de 10 à 12, sachant que le fait d'utiliser l'ensemble de modèles d'apprentissage automatique pour déterminer les valeurs de distance comprend le fait de :
déterminer, par un gestionnaire de distance (135), si les valeurs de distance peuvent être déterminées sur la base d'une expression régulière ; et
après avoir déterminé que les valeurs de distance peuvent être déterminées sur la base de l'expression régulière, d'utiliser l'expression régulière pour déterminer les valeurs de distance au lieu d'utiliser le troisième modèle d'apprentissage automatique qui est le modèle ML propre pour déterminer les valeurs de distance.

14. Le procédé d'après l'une quelconque des revendications de 8 à 13, sachant que le fait de dériver les valeurs de données d'émissions de gaz comprend le fait de :
déterminer un ensemble de quantités différentes d'émissions de gaz produites pour différentes distances sur la base d'un sous-ensemble du troisième ensemble de valeurs de données (315-330 ; 415-430 ; 515-530) ; et de
dériver les valeurs de données d'émissions de gaz en se fondant en outre sur l'ensemble de données définies.

15. Un système comprenant :
un ensemble d'unités de traitement ; et
un support lisible par machine non transitoire stockant des instructions qui, lorsqu'elles sont exécutées par au moins une unité de traitement de l'ensemble d'unités de traitement, amènent ladite au moins une unité de traitement à exécuter le procédé mis en œuvre par ordinateur d'après l'une quelconque des revendications de 8 à 14.
